Europäisches Patentamt

(19) European Patent Office

Office européen des brevets

(11) Publication number: **0 013 036**
**B1**

(12) **EUROPEAN PATENT SPECIFICATION**

(45) Date of publication of patent specification: 07.09.83

(21) Application number: 79200622.3

(22) Date of filing: 26.10.79

(51) Int. Cl.³: **G 01 B 11/30,**
**G 01 N 21/90**

(54) A method of optical inspection for surface defects and the use of apparatus for carrying out said method.

(30) Priority: 02.11.78 NL 7810905

(43) Date of publication of application:
09.07.80 Bulletin 80/14

(45) Publication of the grant of the patent:
07.09.83 Bulletin 83/36

(84) Designated Contracting States:
DE FR GB NL

(56) References cited:
GB - A - 1 091 958
US - A - 3 397 609
US - A - 4 049 350

(73) Proprietor: SKF Industrial Trading & Development
Company B.V.
Kelvinbaan 16 P.O. Box 50
NL-3430 AB Nieuwegein (NL)

(72) Inventor: Schouten, Marcel
Bovenkerkweg 23
Montfoort (NL)

(74) Representative: Merkelbach, B.
SKF Engineering & Research Centre B.V. P.O. Box
50 Plettenburgerweg 6A
NL-3430 AB Nieuwegein (NL)

Courier Press, Leamington Spa, England

# A method of optical inspection for surface defects and the use of apparatus for carrying out said method

The invention relates to a method of optical inspection for surface defects on objects, each sbject having a reflective surface, and the use of apparatus for carrying out said method.

Such a system is disclosed in British Patent 1,380,777 for example. In this type of inspection system, the light reflected from the reflective surface is a measure of the surface condition of the objects and ultimately a criterion of acceptance or rejection. One of the disadvantages of known systems, however, is the comparatively large number of preliminary treatments to which the objects must be subjected before they are ready for optical inspection. These preliminary treatments consist primarily of a washing operation, to remove coarse dirt particles, followed by a rinsing operation, after which the objects are subjected to a hot air treatment and finally the objects — to prevent damage to the surface — are cooled in uniform manner. It will readily be understood that especially the drying and cooling treatments are expensive operations, if only because of the special facilities and energy-consuming equipment required therefor. It is also known from US—A—4049350 and US—A—3397609 to inspect optically an object for defects while moving it immersed within a liquid, selected to have the same refractiveness as that of the object. These specifications, however, make no reference to cleaning the object.

The method of the present invention avoids the problems outlined above in that each object is immersed in a cleaning liquid and conveyed there-through in order to clean said object, the surface of the object being simultaneously investigated by optical measuring means to detect flaws or defects on its surface. The invention also includes the use of apparatus for carrying out said method as claimed in claim 3 of the accompanying claims. Surprisingly it has been found that when carrying out this method, the objects travelling through the liquid provide an extraordinarily good reflection pattern from which defects for example in machining, damage or texturing can be clearly recognized, even notwithstanding the fact that the surroundings, that is to say the liquid, may be considerably fouled. This may be a consequence of the fact that on the surface in motion to be observed, small liquid vortexes are set, up, which which keep the surface portion to be examined or inspected clean enough for reliable optical inspection. Furthermore, besides the marked simplification and the saving of expense, another result is that the area of the objects which can readily be (optically) inspected is large since the objects moving in the liquid can change position, i.e. surface to be viewed, in relation to the measuring means. To encourage this change, the liquid may be set in motion by known means, as for example a wave generating apparatus; alternatively, the conveyor for the objects can be so constructed that while travelling in the liquid, the objects as it were automatically change attitude, that is, the portion of surface in view.

According to an advantageous embodiment of the invention, the liquid comprises a cleaning agent whereby finer dirt particles on the surface of the objects are removed, thereby in simple manner achieving an optimization of the optical inspection. Preferably so-called solvents of the organic type such as "white spirit" or trichloroethylene, or else of the aqueous type such as "alkaline cleaners", are used.

It is further very advantageous if a preserv-·ative or rust preventive agent is dissolved in the liquid. Preferably so-called amines are used in combination with the above mentioned solvents, or sodium nitrites in combination with a cleaning agent of the aqueous type. Thus by this means the extra treatment to prevent rust formation on the objects, as required in known systems, is now dispensed with entirely.

It is noted that some turbidity or fouling of the liquid has a minimal effect on the inspection because of focusing of the optical measuring means on the surface of the objects, whereby the portion between the optical measuring means and the surface of the objects is not preceived, while, as stated, the displacement or motion of the .objects through or in the liquid is found to give a highly reliable picture of their surface condition in the optical measuring means. The light intensity will of course require to be· adjusted to the liquid conditions. It will also be clear that the choice of cleaning agent and rust preventive agent in the liquid will depend on the refractive index that the liquid mixture happens to have, which of course must not interfere with the measurements or inspection. In addition, the system may have a pump installation attached for renewal of the liquid.

A cross section of a schematic layout of equipment in which the invention may be embodied comprises a tank 1 containing liquid 2 mixed with a cleaning and a rust preventive agent. The object 3 to be inspected, in this example a spheroidal rolling member, is located on a conveyor 4 capable of travelling through the liquid 2. A pump installation 5 is further connected to the tank 1, by means of which the liquid can be replenished. Inside or outside of tank 1, means not shown may be arranged to generate (wave) motions of the liquid 2, thereby simultaneously rotating the object 3 on conveyor 4. This rotation (about the longitudinal axis) may alternatively take place under the action of the conveyor 4 travelling in the liquid, which thus must carry the objects 3 against the resistance of the liquid, so that the objects roll on the conveyor 4. The speed of motion of the conveyor 4 is such that the optical measuring apparatus 6, 7 located over the tank 1 is able to scan or inspect all. or at least a considerable portion of the surface of the object 3. The measuring apparatus 6, 7 consists essentially of a sensing means 6, source of light 7 and electronic control means 8 serving a mechanism to separate rejected objects 3b from acceptable objects 3a.

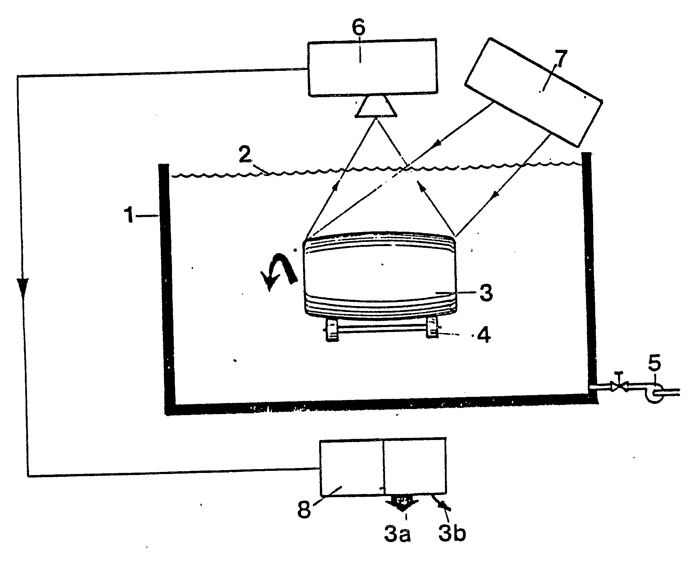

### Claims

1. A method of optical inspection for surface defects on objects each object having a reflective surface in which each object is immersed in a cleaning liquid and conveyed there-through in order to clean said object, the surface of the object being simultaneously investigated by optical measuring means to detect flaws or defects on its surface.

2. A method according to claim 1, wherein a preservative or rust protective agent is dissolved in said liquid.

3. The use of of apparatus comprising a reservoir (1) containing a cleaning liquid, means (4) for conveying objects (3), each having a reflective surface, through said liquid while immersed therein, and optical measuring means (6, 7, 8) located outside said reservoir, to move each object through said liquid and thereby clean it, while simultaneously investigating the reflective surface of said moving object by means of said optical measuring means in order to detect flaws or defects on said surface.

### Patentansprüche

1. Verfahren zur optischen Inspektion von Oberflächenfehlern an Gegenständen, von denen ein jeder eine reflektierende Oberfläche aufweist, bei welchem jeder Gegenstand in eine Reinigungsflüssigkeit eingetaucht und durch diese zum Reinigen des Gegenstandes gefördert wird, wobei die Oberfläche des Gegenstandes gleichzeitig von optischen Meßeinrichtungen untersucht wird, um Risse oder Fehler an seiner Oberfläche zum ermitteln.

2. Verfahren nach Anspruch 1, worin ein Schutz- oder Rostschutzmittel in der Flüssigkeit gelöst ist.

3. Verwendung einer Vorrichtung, bestehend aus einem eine Reinigungsflüssigkeit enthaltenden Behälter (1), Mitteln (4) zum Fördern von Gegenständen (3), von denen ein jeder eine reflektierende Oberfläche aufweist, durch diese Flüssigkeit, während sie darin eingetaucht sind, und außerhalb des Behälters angeordnete optische Meßeinrichtungen (6, 7, 8), um einen jeden Gegenstand durch die Flüssigkeit zu bewegen und ihn dabei zu reinigen, während gleichzeitig die reflektierende Oberfläche des bewegten Gegenstandes mit Hilfe der optischen Meßeinrichtungen untersucht wird, um Risse oder Fehler an der Oberfläche zu ermitteln.

### Revendications

1. Procédé de contrôle optique de défauts superficiels sur des objets possédant chacun une surface réfléchissante, dans lequel chaque objet est immergé dans un liquide de dégraissage et se déplace dans ce liquide afin d'être dégraissé, la surface de l'objet étant en même temps contrôlée par un moyen de mesure optique prévu pour déceler ses défauts ou imperfections.

2. Procédé suivant la revendication 1, dans lequel un agent de protection ou agent antirouille est dissous dans le liquide.

3. Utilisation d'un dispositif comprenant un réservoir (1) contenant un liquide de dégraissage, un moyen (4) pour transporter des objets (3), possédant chacun une surface réfléchissante, dans un liquide dans lequel ils sont immergés, et un moyen (6, 7, 8) de mesure optique placé au-dessus du réservoir, afin de déplacer chaque objet dans le liquide et donc de le dégraisser, en contrôlant simultanément la surface réfléchissante de l'objet en mouvement à l'aide du moyen de mesure optique afin de déceler ses défauts ou imperfections superficiels.